(19) Europäisches Patentamt / European Patent Office / Office européen des brevets

(11) **EP 4 425 385 A1**

(12) **EUROPÄISCHE PATENTANMELDUNG**

(43) Veröffentlichungstag:
**04.09.2024  Patentblatt 2024/36**

(21) Anmeldenummer: **23159905.1**

(22) Anmeldetag: **03.03.2023**

(51) Internationale Patentklassifikation (IPC):
**G06N 3/09** (2023.01)      **B61L 29/00** (2006.01)
**E01B 7/00** (2006.01)

(52) Gemeinsame Patentklassifikation (CPC):
**G06N 20/00; B61L 23/041; B61L 29/28;
B61L 29/30**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Siemens Mobility GmbH
81739 München (DE)**

(72) Erfinder: **Braband, Jens
38106 Braunschweig (DE)**

(74) Vertreter: **Siemens Patent Attorneys
Postfach 22 16 34
80506 München (DE)**

(54) **EIN ÜBERWACHTES MASCHINELLES LERNEN EINES COMPUTERIMPLEMENTIERTEN VERFAHRENS ZUR DURCHFÜHRUNG EINES TECHNISCHEN PROZESSES**

(57)   Die Erfindung betrifft ein überwachtes maschinelles Lernen eines computerimplementierten Verfahrens zur Durchführung eines technischen Prozesses (TPR), bei dem
auf einen Datenpool (DP), enthaltend Datensätze (x;y) mit Eingabedaten und ein richtiges Prozessergebnis beschreibenden Ausgabedaten, erstellt wird,
die Datensätze (x;y) in Trainingsdatensätze (TD) und Validierungsdatensätze (VD) unterteilt werden,
das computerimplementierte Verfahren in einer Trainingsphase (TP) trainiert wird, wobei Verfahrensparameter des Verfahrens bei wiederholten Verfahrensdurchführungen variiert werden,
in einer Validierungsphase (VP) das trainierte Verfahren überprüft wird, indem die mit dem trainierten Verfahren mit den Eingabedaten berechneten Ausgabedaten mit den das richtige Prozessergebnis beschreibenden Ausgabedaten verglichen werden und als Ergebnis des Vergleichens eine tatsächliche Versagenswahrscheinlichkeit (Ptrue) für das Verfahren berechnet wird. Es wird vorgeschlagen, dass für die Trainingsphase (TP) eine empirische Versagenswahrscheinlichkeit (Pemp) festgelegt wird, die höchstens so groß ist, wie eine vorgegebene Soll-Versagenswahrscheinlichkeit (PFD),
die Validierungsphase (VP) eingeleitet wird, nachdem in der Trainingsphase (TP) festgestellt wurde, dass die empirische Versagenswahrscheinlichkeit (Pemp) nicht überschritten wird. Ferner wird vorgeschlagen, dass eine statistische Signifikanz ($\alpha$) des Ergebnisses der Validierungsphase (VP) berücksichtigt wird, indem in der Validierungsphase (VP) zum Vergleichen mit der tatsächlichen Versagenswahrscheinlichkeit (Ptrue) eine korrigierte Versagenswahrscheinlichkeit (Pval) festgelegt wird, die geringer ist als die vorgegebene Soll-Versagenswahrscheinlichkeit (PFD)

FIG 4

EP 4 425 385 A1

**Beschreibung**

Die vorliegende Erfindung betrifft ein Verfahren zum überwachten maschinellen Lernen eines computerimplementierten Verfahrens zur Durchführung eines technischen Prozesses sowie ein technisches System zum Durchführen eines technischen Prozesses. Außerdem betrifft die Erfindung ein Computerprogramm sowie ein computerlesbares Speichermedium, welche beide ein Programm zur Durchführung des genannten überwachten maschinellen Lernens aufweisen.

Verfahren des maschinellen Lernens zum Trainieren von Algorithmen, die auf künstliche Intelligenz beruhen, werden derzeit schwerpunktmäßig erforscht. Hierbei verbessert das maschinelle Lernen sukzessive die Erfolgsquote bei der Anwendung des betreffenden Algorithmus, wobei sich die Erfolgsquote beispielsweise statistisch darstellen lässt.

Unter künstlicher Intelligenz (im Folgenden auch mit KI abgekürzt), auch Artificial Intelligence genannt, ist im Rahmen dieser Erfindung im engeren Sinne die Fähigkeit eines rechnergestützten maschinellen Lernens, auch Machine Learning genannt, (im Folgenden auch mit ML abgekürzt) zu verstehen. Es geht dabei um das statistische Lernen der Parametrisierung von Algorithmen, vorzugsweise für sehr komplexe Anwendungsfälle. Mittels ML erkennt und erlernt das System anhand von zuvor eingegebenen Lerndaten Muster und Gesetzmäßigkeiten bei den erfassten Prozessdaten. Mithilfe geeigneter Algorithmen können durch ML eigenständig Lösungen zu aufkommenden Problemstellungen gefunden werden. ML gliedert sich in drei Felder - überwachtes Lernen, unüberwachtes Lernen und bestärkendes Lernen (Reinforcement Learning), mit spezifischeren Anwendungen, zum Beispiel Regression und Klassifikation, Strukturerkennung und -vorhersage, Datengenerierung (Sampling) oder autonomes Handeln.

Beim überwachten Lernen wird das System durch den Zusammenhang von Eingabe und zugehöriger Ausgabe bekannter Daten trainiert und erlernt auf diese Weise approximativ funktionale Zusammenhänge. Dabei kommt es auf die Verfügbarkeit geeigneter und ausreichender Daten an, denn wenn das System mit ungeeigneten (z.B. nicht-repräsentativen) Daten trainiert wird, so lernt es fehlerhafte funktionale Zusammenhänge. Es lernt, wie Datengruppen zu bilden und zu erweitern sind, was typisch für den betreffenden Anwendungsfall ist und wo Abweichungen bzw. Anomalien auftreten. Dadurch lassen sich Anwendungsfälle beschreiben und Fehlerzustände entdecken. Beim bestärkenden Lernen lernt das System durch Versuch und Irrtum, indem es zu gegebenen Problemstellungen Lösungen vorschlägt und über eine Feedbackfunktion eine positive oder negative Bewertung zu diesem Vorschlag erhält. Je nach Belohnungsmechanismus erlernt das KI-System, entsprechende Funktionen auszuführen.

Die Konstruktion von einer Funktion f auf der Basis von (xl, y1), ..., (xn, yn), hier ist der Übersichtlichtkeit halber das Beispiel für Wertepaare in einem zweidimensionalen Raum gezeigt, auf den die Erfindung jedoch nicht beschränkt ist, bezeichnet man als statistisches Lernen. Die Variable x bezeichnet hierbei die Eingabewerte und die Variable y die Ausgabewerte der Funktion f. Dieses statistische Lernen liegt dem maschinellen Lernen zugrunde.

Der bekannte Stand der Technik, die DE 10 2021 200 803 A1, von dem die Erfindung ausgeht, betrifft eine überwachtes maschinelles Lernen. Hierbei ist vorgesehen, dass die Anlernphase auch einen Trainingsschritt auf der Basis von simulierten Messdaten, die durch Simulation auf der Basis eines Simulationsmodells der technischen Einrichtung erzeugt worden sind, und/oder realen Messdaten, die von einer oder mehreren realen Messdatenquellen der technischen Einrichtung erzeugt worden sind, und einen Validierungsschritt, der die Qualität der Anlernphase überprüft, umfasst.

Problematisch im Stand der Technik ist, dass Anwendungen, die sicherheitsrelevant sind, besonderen Anforderungen bei der Zulassung gerecht werden müssen. Hierbei sind vorgegebene Sicherheitsstandards zu erreichen, wobei es noch nicht gelungen ist, bei einem durch maschinelles Lernen trainierten Algorithmus, der eine künstliche Intelligenz anwendet, einen geeigneten Sicherheitsnachweis zu führen, damit dieser die sicherheitsrelevante Anwendung im laufenden Betrieb optimieren kann.

Aufgabe der vorliegenden Erfindung ist es deshalb, ein überwachtes maschinelles Lernen dahingehend zu verbessern, dass eine Trainingsphase des maschinellen Lernens möglichst so zuverlässig abgeschlossen werden kann, dass eine anschließende Validierung des Verfahrens mit möglichst hoher Wahrscheinlichkeit erfolgreich sein wird. Insbesondere ist es Aufgabe der Erfindung, dass eine Validierung des Ergebnisses eines überwachten maschinellen Lernens mit möglichst hoher Wahrscheinlichkeit der Richtigkeit entspricht und somit auch für sicherheitsrelevante technische Prozesse, insbesondere im laufenden Betrieb, zum Einsatz kommen kann. Weiterhin ist es Aufgabe der Erfindung, ein technisches System anzugeben, welches einem maschinellen Lernen insbesondere auch dann zugänglich ist, wenn dieses mit hohen Sicherheitsanforderungen betrieben werden muss. Zuletzt ist es Aufgabe der Erfindung ein Computerprogramm sowie ein computerlesbarer Speichermedium anzugeben, mit dem das überwachte maschinelle Lernen durchführbar ist.

Zur Lösung der Aufgabe wird erfindungsgemäß ein Verfahren zum überwachten maschinellen Lernen (im Folgenden kurz als überwachtes maschinelles Lernen bezeichnet) nach Anspruch 1 vorgeschlagen.

Vorgeschlagen wird demnach ein überwachtes maschinelles Lernen eines computerimplementierten Verfahrens zur Durchführung eines technischen Prozesses, bei dem die folgenden Schritte durchgeführt werden, dass

auf einen Datenpool, enthaltend Datensätze mit Eingabedaten für den Prozess und den Eingabedaten zugeordneten, ein richtiges Prozessergebnis beschreibenden Ausgabedaten, erstellt wird,

die Datensätze im Datenpool in Trainingsdatensätze und Validierungsdatensätze unterteilt werden,

das computerimplementierte Verfahren unter Verwendung der Trainingsdatensätze in einer Trainingsphase trainiert wird, wobei Verfahrensparameter des computerimplementierten Verfahrens bei wiederholten Verfahrensdurchführungen variiert werden,

in einer Validierungsphase das trainierte computerimplementierte Verfahren unter Verwendung der Validierungsdatensätze überprüft wird, indem die mit dem trainierten computerimplementierten Verfahren mit den Eingabedaten berechneten Ausgabedaten mit den das richtige Prozessergebnis beschreibenden Ausgabedaten verglichen werden und als Ergebnis des Vergleichens eine tatsächliche Versagenswahrscheinlichkeit für das computerimplementierte Verfahren berechnet wird.

Hierbei ist zu berücksichtigen, dass das Prozessergebnis, welches durch die Ausgabedaten beschrieben wird, durch die Eingabedaten erzeugt wurde, denen das Prozessergebnis zugeordnet ist. Mit anderen Worten ist in dem Datenpool für alle Eingabedaten das Prozessergebnis in Form der Ausgabedaten bereits bekannt. Dieses macht die Durchführung des überwachten maschinellen Lernens möglich, da eine Überwachung darin besteht, zu überprüfen, ob die Ausgabedaten das richtige (bekannte) Prozessergebnis beschreiben. Erfindungsgemäß werden hierbei die mathematischen Grundlagen der statistischen Lerntheorie angewendet.

Damit die das richtige Prozessergebnis beschreibenden, im Datenpool vorliegenden Ausgabedaten (im Folgenden kurz richtige Ausgabedaten genannt) und die berechneten Ausgabedaten als gleich angesehen werden, müssen diese nicht notwendigerweise identisch sein. Für die Ausgabedaten kann beispielsweise ein Toleranzbereich festgelegt werden, der beispielsweise ein bestimmtes Maß einer Ungenauigkeit des computerimplementierten Verfahrens berücksichtigt bzw. erlaubt. Solange die ermittelten Ausgabedaten innerhalb eines solchen Toleranzbereiches liegen, können Sie als übereinstimmend mit den das richtige Prozessergebnis beschreibenden Ausgabedaten angesehen werden.

Anders verhält es sich beispielsweise bei technischen Prozessen, die Klassifikationsprobleme behandeln. Wenn die Ausgabedaten eine bestimmte Klasse beispielsweise von Hindernissen beschreiben, dann muss die Klasse, die die berechneten Ausgabedaten beschreiben, exakt der durch die richtigen Ausgabedaten identifizierten Klasse entsprechen. Andernfalls liegt eine Fehlklassifikation vor. In diesen einfachen Fällen entspricht die Wahrscheinlichkeit einer Fehlklassifikation dem Sicherheitsrisiko, das bei dem Klassifikationsproblem zu bewerten ist.

Voraussetzung zur Durchführung des erfindungsgemäßen Verfahrens ist, dass die Daten im Datenpool hinreichend repräsentativ sind. Außerdem müssen diese repräsentativen Daten auch derart in Trainingsdatensätze und Validierungsdatensätze aufgeteilt werden, dass diese beiden Teilmengen wiederum repräsentativ sind. Dies kann beispielsweise durch ein zufälliges Auswählen der Datensätze jeweils für die Gruppe an Trainingsdatensätzen oder für die Gruppe an Validierungsdatensätzen gewährleistet werden. Die Datensätze des Datenpools können auf einer Datenerhebung beispielsweise durch Messungen in einem realen Prozess oder durch Simulation dieses realen Prozesses gewonnen werden. Die Simulation des realen Prozesses kann mit an sich bekannten Simulationsmethoden durchgeführt werden. Dabei handelt es sich jedoch nicht um die Trainingsphase, in der das computerimplementierte Verfahren trainiert wird.

Dass die Datensätze im Datenpool in Trainingsdatensätze und Validierungsdatensätze unterteilt werden, bedeutet, dass die Trainingsdatensätze nur für die Trainingsphase und die Validierungsdatensätze nur für die Validierungsphase verwendet werden. Bei der Aufteilung der Datensätze ergibt sich ein bestimmtes Verhältnis zwischen den Trainingsdatensätzen und den Validierungsdatensätzen (hierzu im Folgenden noch mehr).

Während in der Trainingsphase das computerimplementierte Verfahren variiert werden kann, um die Durchführung des zugehörigen technischen Prozesses möglichst weitgehend zu optimieren, darf das Verfahren während der Validierungsphase nicht mehr verändert werden. Die Trainingsphase dient der Optimierung des Verfahrens, während die Validierungsphase dazu dient, die Zuverlässigkeit des optimierten Verfahrens zu ermitteln. Um das Verfahren zu variieren, können beispielsweise Parameter des Verfahrens verändert werden. Dieses geschieht vorzugsweise zwischen einzelnen Verfahrensdurchführungen, sodass Ergebnisse der Verfahrensdurchführungen in Form der berechneten Ausgabedaten hinsichtlich des Optimierungsfortschrittes beurteilt werden können. Insbesondere können die berechneten Ausgabedaten mit den das richtige Prozessergebnis beschreibenden Ausgabedaten verglichen werden, wobei letztere Ausgabedaten in den Datensätzen vorhanden sind. Als Verfahrensdurchführung ist somit ein Teil im Verfahrensablauf zu verstehen, der sich innerhalb des Verfahrens derart abgrenzen lässt, dass dieser Teil eine Bewertung des Optimierungsfortschrittes ermöglicht. Insbesondere ist eine jeweilige Verfahrensdurchführung dadurch charakterisiert, dass innerhalb der Verfahrensdurchführung Eingabedaten eines Datensatzes verarbeitet werden und berechnete Ausgabedaten innerhalb der Verfahrensdurchführung erzeugt werden.

Die Zuverlässigkeit des Systems wird anhand der Versagenswahrscheinlichkeit des Verfahrens hinsichtlich richtig erzeugter Ausgabedaten beurteilt. Die Versagenswahrscheinlichkeit muss auf jeden Fall unterhalb einer Soll-Versagenswahrscheinlichkeit liegen, damit die Validierung des Verfahrens in der Validierungsphase als erfolgreich bewertet werden kann. In der Sicherheitstechnik wird die Soll-Versagenswahrscheinlichkeit auch als Sicherheitsziel oder als Sicherheitsziel oder target failure measure bezeichnet. Erfindungsgemäß wird sogar ein strengeres Kriterium in Form einer korrigierten Versagenswahrscheinlichkeit berücksichtigt, die geringer ist, als die Soll-Versagenswahrscheinlichkeit (hierzu im Folgenden noch mehr) . Ein Versagen liegt beispielsweise bei einer Fehlklassifikation oder bei einer Abweichung der berechneten Ausgabedaten von den richtigen Ausgabedaten über die zulässigen Toleranzen hinaus vor.

Für sicherheitsrelevante Prozesse ist es von essenzieller Bedeutung, dass bei deren Einsatz nach Abschluss des maschinellen Lernens eine vorgegebene Soll-Versagenswahrscheinlichkeit unterschritten wird, um Gefährdungen auszuschließen. Dafür wird beispielsweise die Wahrscheinlichkeit eines Gefahr bringenden Versagens bei Anforderung der Ausgabedaten des Verfahrens, die für den sicherheitsrelevanten Prozess benötigt werden, betrachtet (zu Englisch: probability of dangerous failure on demand, kurz PFD).

Gemäß der internationalen Norm IEC 61508 beziehungsweise spezifisch für den Bahnbereich gemäß der europäischen Norm EN 50129 werden für Sicherheitsfunktionen ausführende technische Prozesse (Safety) vier Sicherheits-Integritätslevel oder Englisch Safety Integrity Level (SIL) beziehungsweise Sicherheits-Anforderungsstufen unterschieden. Hierbei stellt der Sicherheits-Integritätslevel 4 die höchste und der Sicherheits-Integritätslevel 1 die niedrigste Stufe der Sicherheits-Integrität dar. Der jeweilige Sicherheits-Integritätslevel beeinflusst das Vertrauensintervall eines Messwertes dahingehend, dass das Vertrauensintervall umso kleiner ist, je höher der Sicherheits-Integritätslevel ist, der seitens der jeweiligen Vorrichtung zu erfüllen ist. Die Dimension der Sicherheit der verschiedenen Sicherheits-Integritätslevel lässt sich anschaulich mit der zu erwartenden Häufigkeit eines Ausfalls des Sicherheitsrelevanten Systems MTBF (Mean Time Between Failures) beschreiben. Diese liegt bei SIL-1 im Bereich von 10 ... 100 a, bei SIL-2 im Bereich von 100 ...1000 a, bei SIL-3 im Bereich von 1000 ... 10000 a, und bei SIL-4 im Bereich von 10000 ... 100000 a.

Für die Validierung ist es weiterhin wichtig, dass die Validierungsdatensätze jeweils nur ein einziges Mal zur Validierung verwendet werden - zumindest innerhalb eines in sich geschlossenen Validierungsvorganges (vorzugsweise können die Validierungsdatensätze nach ihrer einmaligen Verwendung sogar gelöscht werden, sie können jedoch bei einem neu begonnenen Validierungsvorgang erneut verwendet werden). Nur so kann sichergestellt werden, dass die Validierung statistisch zuverlässig erfolgt. Demgegenüber können Trainingsdaten grundsätzlich auch mehrfach innerhalb eines Trainings des betreffenden Verfahrens verwendet werden, ohne dass hierdurch die Sicherheitsanforderungen an das Verfahren leiden, da dieses anschließend ja noch validiert wird.

Wenn die tatsächliche Versagenswahrscheinlichkeit über der korrigierten Versagenswahrscheinlichkeit liegt, dann ist das Ergebnis der Validierung, dass das trainierte Verfahren den Anforderungen an die Zuverlässigkeit des durchzuführenden Prozesses als nicht erfüllt anzusehen ist, obwohl die Soll-Versagenswahrscheinlichkeit eigentlich höher liegt. Das trainierte Verfahren kann somit für einen Einsatz gesperrt werden. Es kann überdies eine erneute Trainingsphase eingeleitet werden. Wenn die tatsächliche Versagenswahrscheinlichkeit höchstens so hoch wie die korrigierte Versagenswahrscheinlichkeit ist, dann war die Validierung erfindungsgemäß sogar unter Berücksichtigung eines die statistische Signifikanz erfassenden Sicherheitszuschlags erfolgreich. Das trainierte Verfahren kann somit zum Einsatz freigegeben werden.

Erfindungsgemäß wird nämlich vorgeschlagen, dass eine statistische Signifikanz des Ergebnisses der Validierungsphase berücksichtigt wird, indem in der Validierungsphase zum Vergleichen mit der tatsächlichen Versagenswahrscheinlichkeit eine korrigierte Versagenswahrscheinlichkeit festgelegt wird, die geringer ist als die vorgegebene Soll-Versagenswahrscheinlichkeit.

Rechnergestützt oder computerimplementiert ist eine Vorrichtung, wenn diese mindestens einen Computer oder Prozessor aufweisen, oder ein Verfahren, wenn mindestens ein Computer oder Prozessor mindestens einen Verfahrensschritt des Verfahrens ausführt.

Eine Rechenumgebung ist eine IT-Infrastruktur, bestehend aus Komponenten wie Computern, Speichereinheiten, Programmen und aus mit den Programmen zu verarbeitenden Daten, die zur Ausführung mindestens einer Applikation, die eine Aufgabe zu erfüllen hat, verwendet werden. Die IT-Infrastruktur kann auch aus einem Netzwerk der genannten Komponenten bestehen.

Recheninstanzen (oder kurz Instanzen) bilden innerhalb einer Rechenumgebung funktionale Einheiten aus, die Applikationen (gegeben beispielsweise durch eine Anzahl von Programmmodulen) zugeordnet werden können und diese ausführen können. Diese funktionalen Einheiten bilden bei der Ausführung der Applikation physikalisch (beispielsweise Computer, Prozessor) und/oder virtuell (beispielsweise Programmmodul) in sich geschlossene Systeme.

Computer sind elektronische Geräte mit Datenverarbeitungseigenschaften. Computer können beispielsweise Clients, Server, Handheld-Computer, Kommunikationsgeräte und andere elektronische Geräte zur Datenverarbeitung sein, die Prozessoren und Speichereinheiten aufweisen können und über Schnittstellen auch zu einem Netzwerk zusammengeschlossen sein können.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Speichereinheiten können als computerlesbarer Speicher in Form eines Arbeitsspeichers (engl. Random-Access Memory, RAM) oder Datenspeichers (Festplatte oder Datenträger) ausgeführt sein.

Programmmodule sind einzelne Software-Funktionseinheiten, die einen erfindungsgemäßen Programmablauf von Verfahrensschritten ermöglichen. Diese Software-Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Schnittstellen können hardwaretechnisch, beispielsweise kabelgebunden oder als Funkverbindung, oder softwaretechnisch, beispielweise als Interaktion zwischen einzelnen Programmmodulen eines oder mehrerer Computerprogramme, realisiert sein.

Sofern es in der nachfolgenden Beschreibung nicht anders angegeben ist, beziehen sich die Begriffe "erstellen", "feststellen", "berechnen", "generieren", "konfigurieren", "modifizieren" und dergleichen vorzugsweise auf Prozesse, die Daten erzeugen und/oder verändern und/oder die Daten in andere Daten überführen. Dabei liegen die Daten insbesondere als physikalische Größen vor, beispielsweise als elektrische Impulse oder analoge elektrische Größen. Die erforderlichen Anweisungen sind in einem Computerprogramm als Software zusammengefasst. Weiterhin beziehen sich die Begriffe "senden", "empfangen", "einlesen", "auslesen", "übertragen" und dergleichen auf das Zusammenspiel einzelner Hardwarekomponenten, insbesondere Prozessoren, und/oder Softwarekomponenten, insbesondere Programmmodule über Schnittstellen.

Die korrigierte Versagenswahrscheinlichkeit ermöglicht es, wie bereits beschrieben, also, eine statistische Signifikanz für die Validierungsphase zu berücksichtigen, wobei die statistische Signifikanz die Wahrscheinlichkeit zum Ausdruck bringt, dass die Validierung eines trainierten computerimplementierten Verfahrens fälschlich erfolgt. Damit ist gemeint, dass die Validierung erfolgreich ist, obwohl die tatsächliche Fehlerwahrscheinlichkeit höher als die Soll-Fehlerwahrscheinlichkeit liegt.

Hierbei wird erfindungsgemäß ein Umstand genutzt, der sich bei der Interpretation von statistischen Wahrscheinlichkeiten im Allgemeinen ergibt und erfindungsgemäß für das Validierungsverfahren genutzt werden kann. Danach ist die Wahrscheinlichkeit als gering einzuschätzen, für den mit der betreffenden statistischen Signifikanz eintretenden Fall, dass die tatsächliche Versagenswahrscheinlichkeit größer ist, als die Soll-Versagenswahrscheinlichkeit und dass sich für die tatsächliche Versagenswahrscheinlichkeit eine im Verhältnis zur Soll-Versagenswahrscheinlichkeit starke Überschreitung ergibt. Demgegenüber ist die Wahrscheinlichkeit als hoch einzuschätzen für den mit der betreffenden statistischen Signifikanz eintretenden Fall, dass die tatsächliche Versagenswahrscheinlichkeit größer ist, als die Soll-Versagenswahrscheinlichkeit und dass sich für die tatsächliche Versagenswahrscheinlichkeit eine im Verhältnis zur Soll-Versagenswahrscheinlichkeit geringe Überschreitung ergibt. Mit anderen Worten wird man durch die erfindungsgemäße Berücksichtigung einer im Vergleich zur Soll-Versagenswahrscheinlichkeit geringeren korrigierten Versagenswahrscheinlichkeit die meisten Fälle eines Validierungsfehlers abdecken und somit die Wahrscheinlichkeit, dass die Validierung fälschlich erfolgreich ist, noch einmal verringern. Hierbei können für den Korrekturfaktor c vorteilhaft beispielsweise Werte im Bereich zwischen einschließlich 0,9 und 1,0 (wobei 1,0 selbst ausgeschlossen ist) gewählt werden.

Diese erfindungsgemäße Erkenntnis ist insbesondere bei sicherheitsrelevanten technischen Prozessen vorteilhaft anwendbar, da bei diesen auch für die Richtigkeit einer erfolgreichen Validierung eines bestimmten erlernten computerimplementierten Verfahrens sehr hohe Anforderungen gestellt werden. Diese Anforderungen können mit der oben geführten Sicherheitsargumentation insbesondere einer erfolgreichen gutachterlichen Zertifizierung genügen. Damit wird es vorteilhaft möglich, die Anwendung des maschinellen Lernens in einer sicherheitsrelevanten Umgebung auch unter hohen Sicherheitsanforderungen erfolgreich zuzulassen (zulassen im Sinne einer positiven Zertifizierung), sodass das maschinelle Lernen auch im Rahmen des laufenden sicherheitsrelevanten Betriebs durchgeführt werden darf, ohne Sicherheitsvorgaben zu verletzten.

Einer Verletzung wird erfindungsgemäß dadurch begegnet, dass eine strengere Vorgabe gemacht wird, nämlich dass bei der Validierung die ermittelte tatsächliche Fehlerwahrscheinlichkeit unter der korrigierten Versagenswahrscheinlichkeit liegen muss, obwohl die zu erreichende Soll-Versagenswahrscheinlichkeit höher liegt, als die korrigierte Versagenswahrscheinlichkeit. Damit wird das Risiko für eine fälschliche Validierung vorteilhaft verringert, da durch die sich bildende Differenz zwischen der Soll-Versagenswahrscheinlichkeit und der korrigierten Versagenswahrscheinlichkeit sozusagen ein statistischer Sicherheitspuffer gebildet wird.

Vorzugsweise wird vorgeschlagen, dass die korrigierte Versagenswahrscheinlichkeit berechnet wird, indem die Soll-Versagenswahrscheinlichkeit mit einem Faktor multipliziert wird, der sich daraus ergibt, dass von 1 die statistische Signifikanz subtrahiert wird und die mit einem Korrekturfaktor, der kleiner als 1 ist, multiplizierte statistische Signifikanz addiert wird.

Mit anderen Worten muss die folgende Bedingung für die korrigierte Versagenswahrscheinlichkeit erfüllt sein.

$$Pval = \alpha c \mathrm{PFD} + (1 - \alpha)\mathrm{PFD} = \mathrm{PFD}(1 - \alpha + \alpha c) \qquad (5)$$

mit

| | |
|---|---|
| Pval | Validierungsfehler (Missclassification) berücksichtigende korrigierte Versagenswahrscheinlichkeit |
| $\alpha$ | statistische Signifikanz (Fehlerwahrscheinlichkeit) für die Validierungsphase |
| $1 - \alpha$ | statistische Konfidenz (Vertrauenswahrscheinlichkeit) für die Validierungsphase |
| c | Konstante (< 1) |
| PFD | Soll-Versagenswahrscheinlichkeit |

Um eine Abhängigkeit der korrigierten Versagenswahrscheinlichkeit von der statistischen Signifikanz abbilden zu können, ist der Korrekturfaktor c erforderlich. Dieser ist mit < 1 anzusetzen, damit die korrigierte Versagenswahrscheinlichkeit geringer ist, als die Soll-Versagenswahrscheinlichkeit. Zur Bestimmung des Korrekturfaktors können beispielsweise erfolgreiche Anwendungen des überwachten maschinellen Lernens ausgewertet werden. Außerdem kann der Korrekturfaktor c variiert werden, wenn sich herausstellt, dass der hinsichtlich der Zuverlässigkeit von Validierungen keine belastbaren Aussagen erzeugt. Durch wiederholtes Anwenden des überwachten maschinellen Lernens ist also auch ein "Lernen" des Korrekturfaktors c möglich.

Die Anwendung der oben erläuterten Gleichung hat den Vorteil, dass mit einfachen Mitteln eine Maßnahme zur Verfügung steht, die Sicherheit der Validierungsphase zu erhöhen. Diese lässt sich durch Angabe einer Berechnungsformel vorteilhaft besonders leicht in ein computerimplementiertes maschinelles Lernen integrieren. Die zum vorstehenden Anspruch erläuterten Vorteile gelten für die Anwendung dieser Formel entsprechend.

Gemäß einer Ausgestaltung der Erfindung ist vorgesehen, dass für die Trainingsphase eine empirische Versagenswahrscheinlichkeit festgelegt wird, die geringer ist als die vorgegebene Soll-Versagenswahrscheinlichkeit, und die Validierungsphase eingeleitet wird, nachdem in der Trainingsphase festgestellt wurde, dass die empirische Versagenswahrscheinlichkeit nicht überschritten wird.

Das Verfahren zum überwachten maschinellen Lernen macht sich dann zusätzlich Grundprinzipien zunutze, die für das statistische Lernen gelten. Da die tatsächliche Versagenswahrscheinlichkeit des zu trainierenden Verfahrens nach Abschluss der Trainingsphase noch nicht bekannt ist, besteht eine Unsicherheit, ob diese tatsächliche Versagenswahrscheinlichkeit über der vorgegebenen Soll-Versagenswahrscheinlichkeit liegen wird, und damit die Validierung fehlschlagen wird. Die tatsächliche Versagenswahrscheinlichkeit wird erst in der Validierungsphase bestimmt. Allerdings verbessern sich die Erfolgsaussichten für das überwachte maschinelle Lernen, wenn für die empirische Versagenswahrscheinlichkeit ein geringerer Wert angesetzt wird, als durch die Soll-Versagenswahrscheinlichkeit vorgegeben ist. Es entsteht sozusagen ein Sicherheitspuffer auch schon für das Ergebnis der Trainingsphase, der zur Wirkung kommt, wenn die in der Validierungsphase ermittelte tatsächliche Versagenswahrscheinlichkeit über der empirischen Versagenswahrscheinlichkeit liegt, weil für eine erfolgreiche Validierung nur die Bedingung erfüllt werden muss, dass die höher liegende Soll-Versagenswahrscheinlichkeit unterboten wird.

Vorzugsweise wird vorgeschlagen, dass während der Trainingsphase wiederholt die innerhalb eines vorgegebenen Betrachtungsintervalls liegenden Verfahrensdurchführungen überprüft werden, indem die mit den Eingabedaten in den Verfahrensdurchführungen berechneten Ausgabedaten mit den das richtige Prozessergebnis beschreibenden Ausgabedaten verglichen werden und als Ergebnis des Vergleichens eine aktuelle Versagenswahrscheinlichkeit betreffend das Betrachtungsintervall für das computerimplementierte Verfahren berechnet wird und die Validierungsphase eingeleitet wird, nachdem festgestellt wurde, dass die berechnete aktuelle Versagenswahrscheinlichkeit mindestens eines der Betrachtungsintervalle die empirische Versagenswahrscheinlichkeit nicht überschreitet.

Die Vorgabe eines Betrachtungsintervalls dient dem Zweck, dass in diesem wiederholt Verfahrensdurchläufe stattfinden können. Dadurch wird es möglich, zu überprüfen, ob die empirische Versagenswahrscheinlichkeit überschritten wird oder nicht, zu diesem Zweck kann der Anteil derjenigen Verfahrensdurchläufe, bei denen die berechneten Ausgabedaten den das richtige Prozessergebnis beschreibenden Ausgabedaten nicht entspricht an der Gesamtzahl der Verfahrensdurchläufe in dem betreffenden Betrachtungsintervall bestimmt werden.

Die Vorgabe des Betrachtungsintervalls kann beispielsweise immer eine feste Anzahl von Verfahrensdurchläufen beinhalten. Eine andere Möglichkeit ist, dass die Verfahrensdurchläufe eine variable Anzahl von Verfahrensdurchläufen beinhalten. Insbesondere ist es auch möglich, dass die Vorgabe der Betrachtungsintervalle derart erfolgt, dass immer alle bereits durchgeführten Verfahrensdurchläufe der Trainingsphase berücksichtigt werden. In diesem Fall wächst das aktuelle Betrachtungsintervall immer weiter an, wobei die statistische Sicherheit der Beurteilung immer größer wird.

Der Vorteil einer wiederholten Prüfung der Einhaltung der empirischen Versagenswahrscheinlichkeit (eingehalten wird diese, wenn die berechnete aktuelle Versagenswahrscheinlichkeit geringer ist, als die empirische Versagenswahrscheinlichkeit) liegt darin, dass die Überwachung der Trainingsphase das Training begleitend durchgeführt werden kann. Sobald die wiederholte Prüfung bestimmten festgelegten Abbruchkriterien für die Trainingsphase entspricht, kann diese beendet werden. Dies kann bedeuten, dass noch nicht alle Trainingsdatensätze verwendet wurden. Andererseits kann dies auch bedeuten, dass bereits alle Trainingsdatensätze einmal verwendet wurden und dass das Training unter mehrfacher Nutzung der zur Verfügung stehenden Trainingsdatensätze fortgeführt wird. Zusätzlich kann die Bedingung aufgestellt werden, dass für den Fall, dass ein Abbruchkriterium für die Trainingsphase erreicht wurde, jedoch noch nicht alle Trainingsdatensätze wenigstens einmal verwendet wurden, dass Training fortgeführt wird, bis alle Trainingsdatensätze verwendet wurden. Hierbei wird es normalerweise (jedoch nicht zwangsläufig) zu einer weiteren Verbesserung der Performance des computerimplementierten Verfahrens kommen.

Vorzugsweise wird vorgeschlagen, dass das Variieren der Verfahrensparameter des computerimplementierten Verfahrens innerhalb der vorgegebenen Betrachtungsintervalle unterdrückt wird.

Mit anderen Worten werden die Trainingsdatensätze, die innerhalb des Betrachtungsintervalls liegen, nicht zur Variation des zu trainierenden computerimplementierten Verfahrens verwendet, sondern zur Verifizierung der bereits durch das Training erreichten Fortschritte hinsichtlich einer Optimierung des Verfahrens. Um die am Beginn des Betrachtungsintervalls geltenden Verfahrensparameter beurteilen zu können, werden diese bei der zuletzt beschriebenen Vorgehensweise nicht mehr verändert, sondern im Betrachtungsintervall mit der festgelegten Anzahl von Verfahrensdurchläufen geprüft. Anschließend kann in der bereits beschriebenen Weise die aktuelle Versagenswahrscheinlichkeit mit der mit Blick auf die berücksichtigte Anzahl von Verfahrensdurchläufen höchstmöglichen statistischen Sicherheit ermittelt werden.

Das Vorgehen hat den Vorteil, dass die Ermittlung der aktuellen Versagenswahrscheinlichkeit eindeutig den am Anfang des Betrachtungsintervalls geltenden Verfahrensparametern zugeordnet werden kann. Weitere Variationen der Verfahrensparameter innerhalb des Betrachtungsintervalls könnten gemäß einer alternativen Ausgestaltung der Trainingsphase zwar auch erfolgen, dann ist das Ergebnis der ermittelten aktuellen Versagenswahrscheinlichkeit allerdings mit größeren statistischen Unsicherheiten behaftet. Dennoch kann auch dann durch das wiederholte Durchlaufen von Betrachtungsintervallen ein Trend festgestellt werden, der eine gerichtete Optimierung während der Trainingsphase erlaubt und letztendlich auch zum Erfolg führen wird. Der Vorteil dieser Alternative ist, dass mehr Trainingsdatensätze für das Trainieren zur Verfügung stehen, weil diese während des Durchlaufens der Betrachtungsintervalle gleichzeitig zur Ermittlung der aktuellen Versagenswahrscheinlichkeit und zum Variieren der Verfahrensparameter genutzt werden, was insbesondere bei einer geringen Zahl von Trainingsdatensätzen von Vorteil ist.

Vorzugsweise wird vorgeschlagen, dass ein auf die Soll-Versagenswahrscheinlichkeit bezogener Sicherheitsfaktor festgelegt wird, mit dem die empirische Versagenswahrscheinlichkeit berechnet wird, wobei die empirische Versagenswahrscheinlichkeit um einen Vertrauensanteil gegenüber der Soll-Versagenswahrscheinlichkeit verringert ist.

Die Berücksichtigung des Sicherheitsfaktors muss sicherstellen, dass die empirische Versagenswahrscheinlichkeit geringer ist, als die Soll-Versagenswahrscheinlichkeit. Der Sicherheitsfaktor ist damit als kleiner 1 anzusetzen, wenn dieser mit der Soll-Versagenswahrscheinlichkeit multipliziert wird. Ist als Sicherheitsfaktor eine Zahl größer 1 definiert, so beschreibt diese die (mehrfache) Sicherheit, dass der empirischen Versagenswahrscheinlichkeit größer ist als die Soll-Versagenswahrscheinlichkeit. Die Soll-Versagenswahrscheinlichkeit muss somit durch den Sicherheitsfaktor größer 1 geteilt werden.

Die Festlegung eines Sicherheitsfaktors ermöglicht es vorteilhaft, ein Maß für die Verbesserung der Erfolgsaussichten des maschinellen Lernens zu erhalten, um diese Zuverlässigkeit besser einschätzen zu können. Erfindungsgemäß entsteht hierdurch ein Vertrauensanteil, der eine Unsicherheit hinsichtlich des Erreichens des angestrebten Ergebnisses der Trainingsphase berücksichtigt. Diese Unsicherheit besteht darin, dass die am Ende der Validierungsphase ermittelte tatsächliche Versagenswahrscheinlichkeit höher liegt, als die durch das Training erreichte empirische Versagenswahrscheinlichkeit, die in der Trainingsphase noch nicht mit hoher Zuverlässigkeit bestimmt werden kann.

Hierbei ist zu berücksichtigen, dass es mitunter schwer ist, eine große Anzahl von Trainingsdatensätzen und Validierungsdatensätzen zur Verfügung zu stellen. Bei sehr großen Zahlen von Datensätzen steigen auch die Erfolgsaussichten. Stehen jedoch weniger Datensätze zur Verfügung, können besonders in diesem Fall die Erfolgsaussichten mit dem Sicherheitsfaktor verbessert werden (wobei natürlich auch bei einer großen Zahl von Datensätzen die Erfolgsaussichten für die Trainingsphase verbessert werden). Das Trainieren erfolgt durch einen maschinellen Lernalgorithmus, der durch eine Funktion f beschrieben werden kann. Dieser muss empirisch, d. h. während des Trainierens, mit einer geringeren empirischen Versagenswahrscheinlichkeit als der geforderten Versagenswahrscheinlichkeit unter Berücksichtigung des Sicherheitsfaktors durchführbar sein, damit das maschinelle Lernen mit sehr hoher Wahrscheinlichkeit erfolgreich abgeschlossen werden kann.

Vorzugsweise wird vorgeschlagen, dass der Sicherheitsfaktor mit mindestens 1/3 und höchstens 2/3, bevorzugt mit 1/2 festgelegt wird.

Im Falle des Sicherheitsfaktors von 1/2 kann also beispielsweise de facto mit der halben geforderten Versagenswahrscheinlichkeit PFD/2 gerechnet werden. Der Vertrauensanteil ist in diesem Fall ebenfalls PFD/2. Mit anderen Worten wird erfindungsgemäß ein Sicherheitsfaktor berücksichtigt, der im Ergebnis einen Vertrauensanteil erzeugt, der bei der Ermittlung der empirischen Versagenswahrscheinlichkeit berücksichtigt wird, wobei die Summe aus Sicherheitsfaktor und Vertrauensanteil gerade 1 ergibt. Dies gilt selbstverständlich auch für andere Sicherheitsfaktoren, beispielsweise von einschließlich 1/3 bis einschließlich 2/3.

Durch Verwendung des Sicherheitsfaktors ergibt sich vorteilhaft eine sehr einfache Methode, um die Trainingsphase insbesondere bei einer kleinen Anzahl von Datensätzen hinsichtlich der Zuverlässigkeit des erreichten Ergebnisses des Trainings abzusichern. Hierbei werden erfindungsgemäß die im Folgenden beschriebenen Zusammenhänge berücksichtigt. Dabei wird angenommen, dass die Datensätze genügend repräsentativ für das maschinelle Lernen sind. Dies muss unabhängig davon gegeben sein, ob diese aus der tatsächlichen Durchführung des technischen Prozesses oder der Simulation des technischen Prozesses entstammen. Sowohl für die Trainingsphase als auch für die Validierungsphase werden die Datensätze vorzugsweise nach dem Zufallsprinzip aufgeteilt.

Während der Trainingsphase wird, wie bereits erläutert, eine empirische Versagenswahrscheinlichkeit festgelegt, die von der tatsächlichen Versagenswahrscheinlichkeit, die nicht bekannt ist, abhängig ist. Diese Abhängigkeit ist vorzugsweise gegeben durch die folgende Funktion der Versagenswahrscheinlichkeit, welche sich unter Berücksichtigung der statistischen Lerntheorie ergibt.

$$P(|Pemp - Ptru| > \varepsilon) < \alpha \qquad (1)$$

mit

P      Fehlklassifizierungswahrscheinlichkeit für ein erfolgreiches Training
Pemp      empirische Versagenswahrscheinlichkeit
Ptrue      tatsächliche Versagenswahrscheinlichkeit (unbekannt)des trainierten zu validierenden Verfahrens
$\varepsilon$      Genauigkeit
$\alpha$      statistische Signifikanz (Fehlerwahrscheinlichkeit) für die Trainingsphase

Diese Formel gibt allgemein eine Grundlage für die Abschätzung an, ob das maschinelle Lernen in der Trainingsphase fälschlicherweise als erfolgreich eingeschätzt wird. Erfolg heißt in diesem Falle, dass das trainierte Verfahren bei seiner Durchführung unterhalb oder gleich der Soll-Versagenswahrscheinlichkeit bleibt, wobei die statistische Signifikanz für die Trainingsphase hierbei berücksichtigt werden muss. Die Formel lässt leicht erkennen, dass die unbekannte tatsächliche Versagenswahrscheinlichkeit größer sein darf, als die zu ermittelnde empirische Versagenswahrscheinlichkeit, wobei die Differenz abhängig von der geforderten Genauigkeit ist. Anders ausgedrückt darf die Summe aus der empirischen Versagenswahrscheinlichkeit und der geforderten Genauigkeit höchstens so groß sein, wie die (zum Zeitpunkt der Abschätzung noch nicht bekannte) tatsächliche Versagenswahrscheinlichkeit. Erfindungsgemäß ist daher vorgesehen, dass ein von der geforderten Genauigkeit abhängiger Sicherheitsfaktor berücksichtigt wird, um den die zu erreichende empirische Versagenswahrscheinlichkeit verringert wird, damit nach Abschluss des Trainings die geforderte tatsächliche Versagenswahrscheinlichkeit mit sehr hoher Wahrscheinlichkeit unterboten oder höchstens erreicht wird. Der Sicherheitsfaktor kann beispielsweise bei mindestens 1/3 und höchstens 2/3 liegen. Bevorzugt kann der Sicherheitsfaktor bei 1/2 festgelegt werden. Bei einem Sicherheitsfaktor von 1/2 gilt beispielsweise:

$$\text{Pemp} = \varepsilon = \text{PFD}/2 \qquad (2),$$

wobei hier die Genauigkeit und empirische Versagenswahrscheinlichkeit gleich groß sind. Im Folgenden wird ein die Genauigkeit ausdrückender Wert auch als Vertrauensanteil bezeichnet, weil dieser Vertrauensanteil, wie gezeigt werden wird, sich aus der geforderten Genauigkeit ableiten lässt. Dies bedeutet, dass der Vertrauensanteil umso größer gewählt werden muss, je geringer die Genauigkeit der Abschätzung (d. h. je größer $\varepsilon$) ist.

Vorzugsweise wird vorgeschlagen, dass der Vertrauensanteil bei einer gegebenen Anzahl von Validierungsdatensätzen abgeschätzt wird als Produkt eines kritischen Faktors und eines Faktors, bestehend aus der Quadratwurzel aus dem Quotienten aus der empirischen Versagenswahrscheinlichkeit im Zähler und der Anzahl der Validierungsdatensätze im Nenner.

Mit anderen Worten muss die folgende Bedingung erfüllt sein.

$$\text{VA} = \text{z} \, (\text{Pemp} \, / \, \text{n})^{1/2} \qquad (3)$$

mit

VA      Vertrauensanteil

z kritischer Faktor

Pemp kritische Versagenswahrscheinlichkeit

n Anzahl der Validierungsdatensätze

Es zeigt sich, dass der Vertrauensanteil umso größer gewählt werden muss, je kleiner die Anzahl der Validierungsdatensätze ist. Dies lässt sich mit Anforderungen an die Sicherheit des Validierungergebnisses erklären. Je größer die Anzahl der Validierungsdatensätze ist, desto sicherer kann das Ergebnis der Validierung erfolgen und desto größer ist die Wahrscheinlichkeit, dass auch bei einem kleinen Vertrauensanteil ein belastbares Validierungsergebnis herauskommt.

Außerdem wird deutlich, dass sich der Vertrauensanteil auch vergrößert, wenn die empirische Versagenswahrscheinlichkeit erhöht wird. Eine Erhöhung der empirischen Versagenswahrscheinlichkeit bedeutet nämlich mit anderen Worten, dass bei einer gegebenen Soll-Versagenswahrscheinlichkeit ein geringerer Sicherheitsfaktor zugrunde gelegt wird. Selbstverständlich steigt bei einem geringeren Sicherheitsfaktor auch das Risiko, dass eine im Rahmen der Validierungsphase ermittelte tatsächliche Versagenswahrscheinlichkeit höher liegt als die Soll-Versagenswahrscheinlichkeit.

Da es sich bei der oben genannten Formel um eine empirische Formel handelt, wird außerdem der kritische Faktor z berücksichtigt. Für den kritischen Faktor gilt, dass dieser umso größer angesetzt werden muss, je kleiner die geforderte statistische Signifikanz für die Trainingsphase sein soll. Durch Wahl des kritischen Faktors z wird somit die statistische Signifikanz für die Trainingsphase indirekt berücksichtigt. Werte für den kritischen Faktor z können im Rahmen des maschinellen Lernens konkretisiert werden, indem überwacht wird, wie hoch der Anteil von Anwendungen des maschinellen Lernens ist, bei denen eine Validierung in der Validierungsphase erfolglos ist.

Mit der oben angegebenen Formel wird somit vorteilhaft ein leicht zu berechnendes Kriterium zur Einschätzung des Vertrauensanteils zur Verfügung gestellt. Zur Berechnung des erforderlichen kritischen Faktors z kann vorteilhaft auf erfolgreiche Durchführungen des überwachten maschinellen Lernens zurückgegriffen werden und anhand der Parameter dieser Durchführungen der fehlende Faktor z berechnet werden. Dieser kann dann verwendet werden, in noch durchzuführende maschinelle Lernprozesse mit Parametern einzusteigen, die die Erfolgsaussichten des überwachten maschinellen Lernens verbessern.

Vorzugsweise wird vorgeschlagen, dass eine geschätzte Versagenswahrscheinlichkeit bei einer gegebenen Anzahl von Validierungsdatensätzen abgeschätzt wird als Summe aus dem Vertrauensanteil und der empirischen Versagenswahrscheinlichkeit.

Mit anderen Worten muss die folgende Bedingung erfüllt sein, wobei, wie leicht zu erkennen ist, die Gleichung (3) in die Gleichung (4) eingesetzt werden kann.

$$\text{Pe = Pemp + VA = Pemp + z (Pemp / n)}^{1/2} \text{ (4)}$$

Da sich die geschätzte Versagenswahrscheinlichkeit aus der Summe der empirischen Versagenswahrscheinlichkeit und dem Vertrauensanteil ergibt, kann durch die Summenbildung schnell abgeschätzt werden, ob die geschätzte Versagenswahrscheinlichkeit oberhalb der Soll-Versagenswahrscheinlichkeit liegt (dann ergibt sich eine kritische geschätzte Versagenswahrscheinlichkeit Pec) . Unter der geschätzten Versagenswahrscheinlichkeit soll im Zusammenhang mit dieser Erfindung die voraussichtlich unter den ungünstigsten Bedingungen entstehende tatsächliche Versagenswahrscheinlichkeit nach Abschluss des überwachten maschinellen Lernens verstanden werden, die nicht kritisch werden darf oder, mit anderen Worten, nicht über der Soll-Versagenswahrscheinlichkeit liegen darf.

Es ist somit vorteilhaft auf einfachem Wege möglich, durch die Anwendung der oben genannten Formel abschätzen zu können, ob das betreffende Verfahren zum überwachten maschinellen Lernen voraussichtlich erfolgreich validiert werden kann oder nicht. Erfolgversprechend sind demnach Werte für die geschätzte Versagenswahrscheinlichkeit, die unterhalb der Soll-Versagenswahrscheinlichkeit liegen.

Vorzugsweise wird vorgeschlagen, die Anzahl der Validierungsdatensätze erhöht wird, wenn die geschätzte Versagenswahrscheinlichkeit über der Soll-Versagenswahrscheinlichkeit liegt.

Mit der Maßnahme einer Erhöhung der Anzahl der Validierungsdatensätze werden mit Blick auf die oben angegebenen Gleichungen die Vorgaben derart verschoben, dass sich ein geringerer Vertrauensanteil ergibt. Hierdurch verringert sich auch die geschätzte Versagenswahrscheinlichkeit.

Mit einer geringeren geschätzten Versagenswahrscheinlichkeit erhöhen sich automatisch die Erfolgsaussichten für eine Validierung des überwachten maschinellen Lernens für den gegebenen Anwendungsfall. Selbstverständlich muss dabei berücksichtigt werden, dass eine Erhöhung der Anzahl der Validierungsdatensätze bei gleichbleibender Anzahl der Datensätze allgemein zu einer Verringerung der Zahl der Trainingsdatensätze führt. Dies ist somit nur in gewissen Grenzen möglich. Gegebenenfalls ist es erforderlich, die Anzahl der Datensätze insgesamt zu erhöhen. Dies kann durch eine Simulation des technischen Prozesses und des zu trainieren computerimplementierten Verfahrens erfolgen.

Vorzugsweise kann aber auch vorgesehen werden, dass die Trainingsdatensätze zur mehrfachen Verwendung für Verfahrensdurchläufe in der Trainingsphase freigegeben werden.

Hierbei ist die Erkenntnis von Bedeutung, dass Trainingsdatensätze für ein Training mehrfach verwendet werden können, wobei eine Optimierung eines bereits teilweise trainierten computerimplementierten Verfahrens auch verbessert werden kann, wenn ein bestimmter Datensatz zum Training wiederholt verwendet wird. Anders, als bei der Validierung, leidet hierunter nicht die sichere Beurteilung des Lernerfolgs während der Validierungsphase.

Vorteilhaft ist es somit möglich, mit einer begrenzten Anzahl von Datensätzen auszukommen, indem ein größerer Anteil der Datensätze als Validierungsdatensatz genutzt wird. Besonders vorteilhaft ist es, wenn mehr als die Hälfte der zur Verfügung stehenden Datensätze als Validierungsdatensatz genutzt wird und der Rest der Datensätze als Trainingsdatensatz.

Die genannte Aufgabe wird alternativ mit dem eingangs angegebenen Anspruchsgegenstand (technisches System) erfindungsgemäß auch dadurch gelöst, dass die Systemkomponente des technischen Systems eingerichtet ist, das computerimplementierte Verfahren nach einem der vorgenannten Ansprüche auszuführen

Mit der Vorrichtung lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäße Vorrichtung.

Des Weiteren wird ein Programmmodule enthaltendes Computerprogramm mit Programmbefehlen zur Durchführung des genannten erfindungsgemäßen Verfahrens und/oder dessen Ausführungsbeispielen beansprucht, wobei mittels des Computerprogramms jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogramms beansprucht. Die Bereitstellungsvorrichtung ist beispielsweise ein Speichereinheit, die das Computerprogramm speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogramm vorzugsweise in Form eines Datenstroms speichert und/oder bereitstellt.

Die Bereitstellung erfolgt in Form eines Programmdatensätzen als Datei, insbesondere als Downloaddatei, oder als Datenstrom, insbesondere als Downloaddatenstrom, des Computerprogramms. Diese Bereitstellung kann beispielsweise aber auch als partieller Download erfolgen, der aus mehreren Teilen besteht. Ein solches Computerprogramm wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:

Figur 1 ein Ausführungsbeispiel der erfindungsgemäßen Vorrichtung (technisches System in Form eines Bahnübergangs) mit ihren Wirkzusammenhängen schematisch,

Figur 2 ein Ausführungsbeispiel einer Rechenumgebung für die Vorrichtung gemäß Figur 1 als Blockschaltbild, wobei die einzelnen Recheninstanzen Programmmodule ausführen, die jeweils in einem oder mehreren der beispielhaft dargestellten Computer ablaufen können und wobei die gezeigten Schnittstellen demgemäß softwaretechnisch in einem Computer oder hardwaretechnisch zwischen verschiedenen Computern ausgeführt sein können,

Figur 3 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Recheninstanzen und Schnittstellen gemäß Figur 2 beispielhaft angedeutet sind,

Figur 4 beispielhaft die zur Anwendung kommenden Algorithmen zur Berechnung bzw. Abschätzung unterschiedlicher Wahrscheinlichkeiten, dargestellt auf einem Strahl für die Wahrscheinlichkeit P.

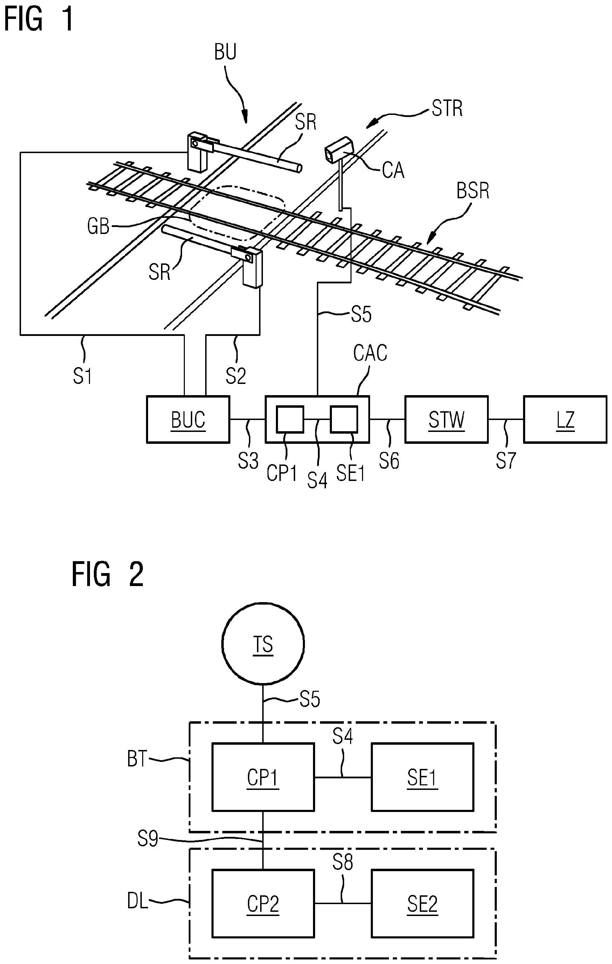

In Figur 1 ist ein Bahnübergang BU dargestellt. Im Bereich des Bahnübergangs BU kreuzt eine Bahnstrecke BSR eine Straße STR für KFZ. Im Kreuzungsbereich entsteht daher ein Gefahrenraum, an dem potenziell ein spurgeführtes Fahrzeug, welches auf der Bahnstrecke BSR unterwegs ist, mit Hindernissen auf der Straße STR (beispielsweise Fahrzeuge oder Fußgänger) zusammenstoßen kann. Daher ist der Bahnübergang BU durch Schranken SR abgegrenzt, die über eine erste Schnittstelle S1 und eine zweite Schnittstelle S2 mit einem Bahnübergangscontroller BUC verbunden sind.

Der Bahnübergangscontroller BUC ist über eine dritte Schnittstelle S3 mit einem Kameracontroller CAC verbunden, der seinerseits über eine fünfte Schnittstelle S5 mit einer Kamera CA verbunden ist. Über eine erste Schnittstelle S1 und eine zweite Schnittstelle S2 ist der Bahnübergangscontroller BUC jeweils mit einer von zwei Schranken SR verbunden, so dass diese eine Schließkommando und ein Öffnungskommando empfangen und umsetzen können.

Die Kamera CA dient einer optischen Überwachung des Gefahrenbereiches GB (häufig auch als Gefahrenraum bezeichnet), sodass Hindernisse in dem Gefahrenbereich GB erkannt werden können. Damit der Kameracontroller CAC eine Bilderkennung zum Zwecke der Erkennung von Hindernissen durchführen kann, wird dieser erfindungsgemäß mit einem maschinellen Lernen trainiert. Hierzu weist dieser einen ersten Computer CP1 und eine erste Speichereinrichtung SE1 auf, die über eine vierte Schnittstelle S4 miteinander verbunden sind (vergleiche auch Figur 2).

Außerdem ist der Kameracontroller CAC mit einem Stellwerk STW über eine sechste Schnittstelle S6 verbunden. Das Stellwerk STW ist einerseits mit einer Leitzentrale LZ verbunden, und zwar über eine siebte Schnittstelle. Bahnübergangscontroller BUC, Kammercontroller CMC, Stellwerk STW und Leitzentrale LZ bilden somit ein Netzwerk, welches als technisches System TS (siehe Figur 2) einer Bahnanlage, im vorliegenden Fall den Bahnübergang BU sowie weitere Infrastrukturkomponenten der Bahnanlage (nicht dargestellt in Figur 1) umfassen.

In Figur 2 ist eine Computerinfrastruktur dargestellt, die einerseits einem Betreiber BT und andererseits einen Dienstleister DL zugerechnet werden können. Der Betreiber BT und der Dienstleister DL können über eine neunte Schnittstelle miteinander kommunizieren, die den ersten Computer CP1 mit einem zweiten Computer C2 verbindet. Der zweite Computer C2 ist überdies über eine achte Schnittstelle mit einer zweiten Speichereinrichtung SE2 verbunden. Über die fünfte Schnittstelle S5 kommuniziert der erste Computer CP1, der dem Betreiber BT zuzurechnen ist, mit dem technischen System TS, welches in Figur 1 repräsentativ durch die Kamera CA angedeutet ist, jedoch, wie bereits erläutert, auch weitere Komponenten der Bahninfrastruktur beinhalten kann.

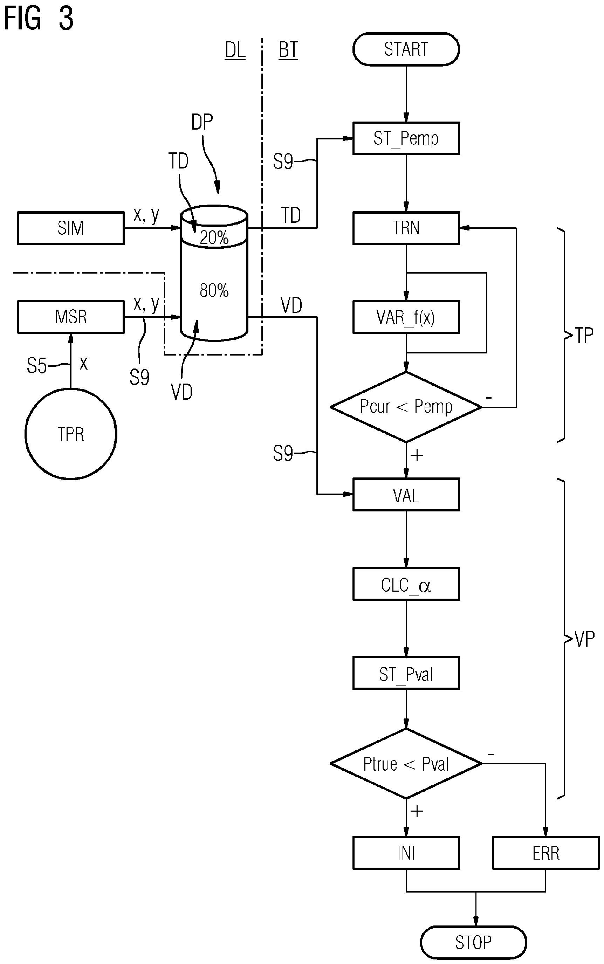

Das computerimplementierte Verfahren zur Durchführung des technischen Prozesses TPR kann, wie in Figur 3 dargestellt, durchgeführt werden, wobei beispielsweise durch Messungen in einem Messschritt MSR Ausgangsgrößen y ermittelt werden können, die sich aus den zugehörigen Eingangsgrößen x ergeben. Alternativ zur Durchführung des technischen Prozesses TPR in der Realität, kann dieser technische Prozess TPR auch in einem Simulationsschritt SIM simuliert werden, wobei durch Simulation zu den Eingangsgrößen x die Ausgangsgrößen y, die sich bei Durchführung des Prozesses ergeben würden, berechnet werden.

In einem Datenpool DP werden die Datensätze x;y, die sich jeweils aus den Eingangsgrößen x und den Ausgangsgrößen y ergeben, gespeichert. In einem in Figur 3 nicht näher dargestellten Schritt werden die Datensätze x;y jeweils in Trainingsdatensätze TD und Validierungsdatensätze VD unterteilt. Dies kann beispielsweise durch Anwendung eines Zufallsgenerators erfolgen. Dabei wird ein Verhältnis, in dem die Datensätze x;y aufgeteilt werden sollen, vorgegeben. Im Beispiel gemäß Figur 3 sollen 20 % Trainingsdatensätze TD und 80 % Validierungsdatensätze VD entstehen.

In Figur 3 wird der Simulationsschritt SIM sowie die Aufteilung der Datensätze x;y im Datenpool DP in Trainingsdatensätze TD und Validierungsdatensätze VD durch den Dienstleister DL vorgenommen. Dies ist durch eine strichpunktierte Trennlinie angedeutet. Demgegenüber werden der Messschritt MSR sowie das maschinelle Lernen, bestehend aus der Trainingsphase TP und der Validierungsphase VP, durch den Betreiber BT vorgenommen.

Steht der Datenpool DP mit einer genügenden Anzahl n von Datensätzen x;y zur Verfügung, wird das Verfahren des maschinellen Lernens gestartet und es folgt als nächstes eine Trainingsphase TP des erfindungsgemäßen Verfahrens. In einem Trainingsschritt TRN wird das Verfahren durch einen wiederholten Variationsschritt VAR_f(x) ein Algorithmus trainiert und nach abgeschlossenem Training der Algorithmus festgelegt. Anschließend erfolgt ein erster Abfrageschritt Pcur<Pemp, ob das Ergebnis des Algorithmus bei der betreffenden Eingangsgröße x die im Datenpool DP gespeicherte Ausgangsgröße y ergibt (gegebenenfalls unter Berücksichtigung eines Toleranzbereiches, der eine zulässige Abweichung der gespeicherten Ausgangsgröße y von der mittels des Algorithmus berechneten Ausgangsgöße festlegt), wobei hierfür nur Trainingsdaten herangezogen werden. Ist dies der Fall, wird die Trainingsphase TP abgeschlossen.

Auf die Trainingsphase TP folgt eine Validierungsphase VP. In der Validierungsphase VP werden folgende Schritte durchlaufen. In einem Bestimmungsschritt CLC_$\alpha$ wird die statistische Signifikanz $\alpha$ festgelegt. Darauf folgt ein Bestimmungsschritt CLC_$\alpha$, in dem eine korrigierte Versagenswahrscheinlichkeit Pval ermittelt wird, die korrigierte Versagenswahrscheinlichkeit Pval berücksichtigt die festgelegte statistische Signifikanz $\alpha$ bezüglich eines Versagens, das heißt falschen Ergebnisses der Validierungsphase VP. In einem zweiten Abfrageschritt Ptru<Pval wird geprüft, ob die tatsächliche Versagenswahrscheinlichkeit Ptrue kleiner ist, als die korrigierte Versagenswahrscheinlichkeit Pval. Im Falle eines positiven Ergebnisses dieser Abfrage wird nachfolgend in einem Initialisierungsschritt INI der maschinell gelernte Algorithmus für den nachfolgenden Einsatz in dem betreffenden technischen Prozess TPR freigegeben und eingeführt. Sollte der zweite Abfrageschritt Ptru<Pval jedoch zu einem negativen Ergebnis führen, wird in einem Ausgabeschritt ERR eine Fehlermeldung ausgegeben. In beiden Fällen wird anschließend der gesamte Prozess des maschinellen Lernens beendet.

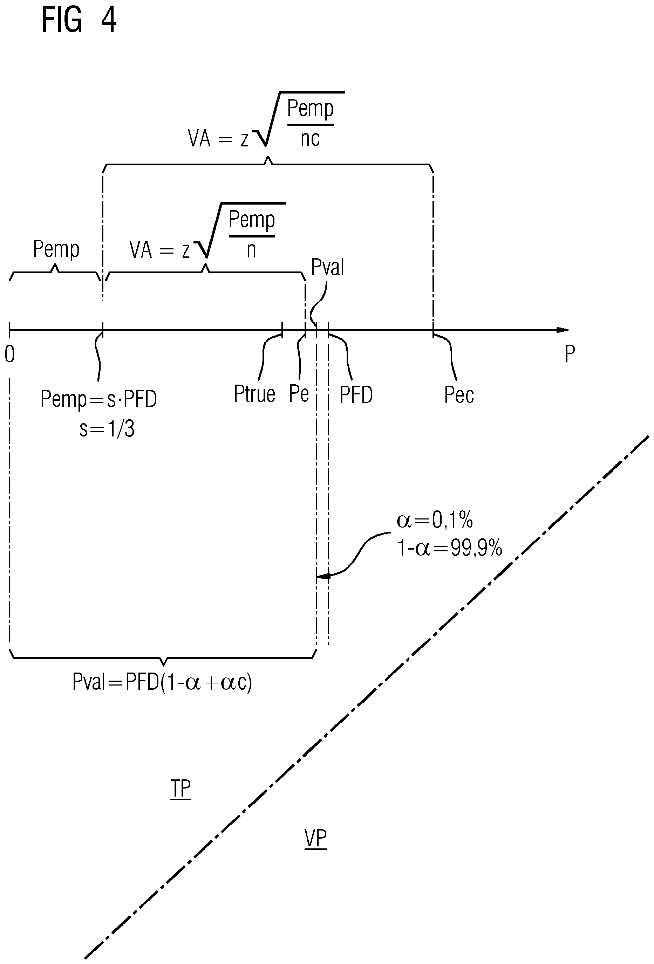

In Figur 4 sind die Zusammenhänge der einzelnen berechneten und tatsächlichen Wahrscheinlichkeiten, die für das erfindungsgemäße Verfahren des maschinellen Lernens relevant sind, schematisch anhand eines die Wahrscheinlichkeit darstellenden Strahls (im folgenden als Wahrscheinlichkeitsstrahl bezeichnet) dargestellt. Weiterhin ist durch eine Strich-Punkt-Linie dargestellt, welcher Teil der schematischen Darstellung sich auf die Trainingsphase TP und welcher Teil der schematischen Darstellung sich auf die Validierungsphase VP bezieht.

Wenn das maschinelle Lernen mit der Trainingsphase TP beginnt, ist die Validierungsphase VP noch durchzuführen. Allerdings sollen Besonderheiten, die mit der statistischen Unsicherheit, verbunden mit der Validierungsphase VP, bestehen, bereits in der Trainingsphase TP berücksichtigt werden. Zu diesem Zweck wird in zwei Stufen vorgegangen, um die Sicherheit des maschinellen Lernens gegen einen Misserfolg wirkungsvoll zu schützen. Diese beiden Stufen erhöhen die Sicherheit gegen einen Misserfolg unabhängig voneinander.

Aufgrund der Sicherheitsrelevanz des technischen Prozesses TPR, für den ein Algorithmus mittels des maschinellen Lernens trainiert werden soll, ist eine Soll-Versagenswahrscheinlichkeit PFD vorgegeben, die sich aus den besonderen Umständen des technischen Systems TS und dessen Betrieb ergibt. Nach Abschluss der Trainingsphase TP des maschinellen Lernens muss diese Soll-Versagenswahrscheinlichkeit PFD unbedingt eingehalten werden, wobei diese angibt, wie hoch die Wahrscheinlichkeit ist, dass der Algorithmus bei der Durchführung des technischen Prozesses TPR nach Anforderung in dem technischen System TS versagt.

Um bei einer begrenzten Anzahl n von Trainingsdatensätzen TD eine Sicherheit zu erzeugen, dass der in der Trainingsphase TP trainierte Algorithmus die Validierungsphase VP erfolgreich durchlaufen wird, wird in einer ersten Stufe eine empirische Versagenswahrscheinlichkeit Pemp festgelegt, die im Beispiel gemäß Figur 4 bei einer Sicherheit $s = 1/3$ (auch Sicherheitsfaktor genannt) bei einem Drittel der Soll-Versagenswahrscheinlichkeit PFD liegt. Ist die empirische Versagenswahrscheinlichkeit Pemp einmal festgelegt, so kann ein Vertrauensanteil VA, der sich statistisch in Bezug auf eine gegebene Anzahl n von Validierungsdatensätze VD ergibt, unter Berücksichtigung eines kritischen Faktors z eingeschätzt werden zu:

$$VA = z \; (Pemp \; / \; n)^{1/2} \hspace{4cm} (3)$$

Die Summe aus der empirischen Versagenswahrscheinlichkeit Pemp und dem Vertrauensanteil VA ergibt eine geschätzte Wahrscheinlichkeit Pe, welche grundsätzlich unterhalb der Soll-Versagenswahrscheinlichkeit PFD liegen muss, wie dies in Figur 4 dargestellt ist. Dies hängt, wie bereits erwähnt, von der Anzahl n an Validierungsdatensätzen VD ab. In Figur 4 ist dies auch für eine kritische Anzahl nc an Validierungsdatensätzen VD dargestellt, für die sich eine kritische geschätzte Wahrscheinlichkeit Pec ergibt, die oberhalb der Soll-Versagenswahrscheinlichkeit PFD liegt. Hierauf kann reagiert werden, indem die empirische Versagenswahrscheinlichkeit Pemp weiter herabgesetzt wird. Eine andere Möglichkeit besteht darin, die Anzahl n der Validierungsdatensätze VD zu erhöhen, wobei dies zu einer Verringerung der Trainingsdatensätze TD führt und daher nur in bestimmten Grenzen durchgeführt werden kann. Deswegen besteht auch noch eine weitere Alternative, durch zusätzliche Messungen oder Simulationen weitere Datensätze x;y zu erzeugen, sodass eine größere Menge an Datensätzen x;y zur Verfügung steht und daher auch die Anzahl n an Validierungsdatensätze VD erhöht werden kann.

Wie bereits beschrieben, soll nach der Trainingsphase TP die Validierungsphase VP durchgeführt werden. Diese dient einer Validierung des trainierten Algorithmus, wobei hierbei die zur Verfügung stehenden Validierungsdatensätze VD verwendet werden. Für jeden dieser Anzahl n an Datensätzen x;y wird der Algorithmus mit den zugehörigen Eingabedaten in einem Validierungsschritt durchgeführt und das Ergebnis mit dem im Validierungsdatensatz VD gespeicherten Soll-Ergebnis (hierbei handelt es sich um die Ausgabedaten) verglichen. Die Summe aller Validierungsschritte, die der Anzahl n an Validierungsdatensätzen VD entspricht, bildet ein Validierungsdurchlauf. Aus dem Verhältnis der Zahl der Validierungsschritte nfail, bei denen der Algorithmus versagt hat, zu der Gesamtheit (Anzahl n) der Validierungsschritte lässt sich die tatsächliche Versagenswahrscheinlichkeit Ptrue direkt berechnen zu:

$$Pkrit = nfail \; / \; n$$

Auch der Validierungsprozess, der in der Validierungsphase VP durchlaufen wird (Validierungsdurchlauf), ist mit einer statistischen Unsicherheit behaftet, die sich mit der statistischen Signifikanz $\alpha$ beschreiben lässt. Soll das Verfahren des maschinellen Lernens für sicherheitskritische Anwendungen zertifiziert werden, so muss diese statistische Unsicherheit bei der Durchführung des maschinellen Lernens berücksichtigt werden. Dies erfolgt durch Bestimmung einer korrigierten Versagenswahrscheinlichkeit Pval, die in der zweiten Stufe dem Validierungsverfahren zugrunde gelegt werden muss. Für die Validierung wird gefordert, dass diese korrigierte Versagenswahrscheinlichkeit Pval bei der Validierung, d. h. bei der Bestimmung der tatsächlichen Versagenswahrscheinlichkeit Ptrue zugrunde gelegt werden muss. Die korrigierte Versagenswahrscheinlichkeit Pval ergibt sich zu:

$$Pval = \alpha c \mathrm{PFD} + (1 - \alpha)\mathrm{PFD} = \mathrm{PFD}(1 - \alpha + \alpha c) \qquad (5)$$

Zu bemerken ist, dass die erste Stufe und die zweite Stufe unabhängig voneinander durchgeführt werden. Dies bedeutet insbesondere, dass für die Einschätzung, ob die empirische Versagenswahrscheinlichkeit Pemp für die gegebene Anzahl n von Validierungsdatensätzen VD ausreicht, die Soll-Versagenswahrscheinlichkeit PFD zugrunde gelegt werden kann, unabhängig davon für die Validierung unter Berücksichtigung der statistischen Signifikanz $\alpha$ jedoch eine geringere korrigierte Versagenswahrscheinlichkeit Pval zugrunde gelegt wird, die durch die tatsächliche Versagenswahrscheinlichkeit Ptrue nicht überschritten werden darf.

Bezugszeichenliste

| | | |
|---|---|---|
| BI | Betrachtungsintervalls |
| BSR | Bahnstrecke |
| BT | Betreiber |
| BU | Bahnübergang |
| BUC | Bahnübergangscontroller |
| c | Korrekturfaktor |
| C2 | zweiter Computer |
| CA | Kamera |
| CAC | Kameracontroller |
| CLC_$\alpha$ | Bestimmungsschritt |
| CP1 | ersten Computer |
| DL | Dienstleister |
| DP | Datenpool |
| ERR | Ausgabeschritt |
| GB | Gefahrenbereich |
| INI | Initialisierungsschritt |
| LZ | Leitzentrale |
| MSR | Messschritt |
| n | Anzahl |
| nc | kritische Anzahl |
| nfail | Zahl der Validierungsschritte |
| Pc | kritische Versagenswahrscheinlichkeit |
| Pcur | aktuelle Versagenswahrscheinlichkeit |
| Pcur<Pemp | erster Abfrageschritt |
| Pe | geschätzte Wahrscheinlichkeit |
| Pec | kritische geschätzte Wahrscheinlichkeit |
| Pemp | empirische Versagenswahrscheinlichkeit |
| PFD | Soll-Versagenswahrscheinlichkeit |
| Ptru<Pval | zweite Abfrageschritt |
| Ptrue | tatsächlichen Versagenswahrscheinlichkeit |
| Pval | korrigierte Versagenswahrscheinlichkeit |
| s | Sicherheitsfaktor |
| S1 ... S9 | Schnittstelle |
| SE1 | erste Speichereinrichtung |
| SE2 | zweiten Speichereinrichtung |
| SIM | Simulationsschritt |
| SR | Schranke |
| STR | Straße |
| STW | Stellwerk |

TD    Trainingsdatensätze
TP    Trainingsphase
TPR   technischen Prozesses
TRN   Trainingsschritt
TS    technisches System
VA    Vertrauensanteils
VAR_f(x)  Variationsschritt
VD    Validierungsdatensätze
VP    Validierungsphase
x     Eingangsgröße
x;y    Datensätze
y     Ausgangsgröße
z     kritischen Faktors
$\alpha$    statistische Signifikanz

**Patentansprüche**

1. Ein überwachtes maschinelles Lernen eines computerimplementierten Verfahrens zur Durchführung eines technischen Prozesses (TPR), bei dem die folgenden Schritte durchgeführt werden, dass

 a) auf einen Datenpool (DP), enthaltend Datensätze (x;y) mit Eingabedaten für den Prozess und den Eingabedaten zugeordneten, ein richtiges Prozessergebnis beschreibenden Ausgabedaten, erstellt wird,
 b) die Datensätze (x;y) im Datenpool (DP) in Trainingsdatensätze (TD) und Validierungsdatensätze (VD) unterteilt werden,
 c) das computerimplementierte Verfahren unter Verwendung der Trainingsdatensätze (TD) in einer Trainingsphase (TP) trainiert wird, wobei Verfahrensparameter des computerimplementierten Verfahrens bei wiederholten Verfahrensdurchführungen variiert werden,
 d) in einer Validierungsphase (VP) das trainierte computerimplementierte Verfahren unter Verwendung der Validierungsdatensätze (VD) überprüft wird, indem die mit dem trainierten computerimplementierten Verfahren mit den Eingabedaten berechneten Ausgabedaten mit den das richtige Prozessergebnis beschreibenden Ausgabedaten verglichen werden und als Ergebnis des Vergleichens eine tatsächliche Versagenswahrscheinlichkeit (Ptrue) für das computerimplementierte Verfahren berechnet wird,

 **dadurch gekennzeichnet, dass**
 eine statistische Signifikanz ($\alpha$) des Ergebnisses der Validierungsphase (VP) berücksichtigt wird, indem in der Validierungsphase (VP) zum Vergleichen mit der tatsächlichen Versagenswahrscheinlichkeit (Ptrue) eine korrigierte Versagenswahrscheinlichkeit (Pval) festgelegt wird, die geringer ist, als eine vorgegebene Soll-Versagenswahrscheinlichkeit (PFD) .

2. Ein überwachtes maschinelles Lernen nach Anspruch 1, **dadurch gekennzeichnet, dass** die korrigierte Versagenswahrscheinlichkeit (Pval) berechnet wird, indem die Soll-Versagenswahrscheinlichkeit (PFD) mit einem Faktor multipliziert wird, der sich daraus ergibt, dass von 1 die statistische Signifikanz ($\alpha$) subtrahiert wird und die mit einem Korrekturfaktor (c), der kleiner als 1 ist, multiplizierte statistische Signifikanz ($\alpha$) addiert wird.

3. Ein überwachtes maschinelles Lernen nach einem der vorhergehenden Ansprüche, **dadurch gekennzeichnet, dass**

 a) für die Trainingsphase (TP) eine empirische Versagenswahrscheinlichkeit (Pemp) festgelegt wird, die geringer ist, als die vorgegebene Soll-Versagenswahrscheinlichkeit (PFD),
 b) die Validierungsphase (VP) eingeleitet wird, nachdem in der Trainingsphase (TP) festgestellt wurde, dass die empirische Versagenswahrscheinlichkeit (Pemp) nicht überschritten wird.

4. Ein überwachtes maschinelles Lernen nach Anspruch 3, **dadurch gekennzeichnet, dass**

 a) während der Trainingsphase (TP) wiederholt die innerhalb eines vorgegebenen Betrachtungsintervalls (BI) liegenden Verfahrensdurchführungen überprüft werden, indem die mit den Eingabedaten in den Verfahrensdurchführungen berechneten Ausgabedaten mit den das richtige Prozessergebnis beschreibenden Ausgabedaten verglichen werden und als Ergebnis des Vergleichens eine aktuelle Versagenswahrscheinlichkeit (Pcur) betreffend das Betrachtungsintervall (BI) für das computerimplementierte Verfahren berechnet wird,
b) die Validierungsphase (VP) eingeleitet wird, nachdem festgestellt wurde, dass die berechnete aktuelle Versagenswahrscheinlichkeit (Pcur) mindestens eines Betrachtungsintervalls (BI) die empirische Versagenswahrscheinlichkeit (Pemp) nicht überschreitet.

**5.** Ein überwachtes maschinelles Lernen nach Anspruch 4, **dadurch gekennzeichnet, dass** das Variieren der Verfahrensparameter des computerimplementierten Verfahrens innerhalb der vorgegebenen Betrachtungsintervalle (BI) unterdrückt wird.

**6.** Ein überwachtes maschinelles Lernen nach einem der Ansprüche 3 bis 5, **dadurch gekennzeichnet, dass** ein auf die Soll-Versagenswahrscheinlichkeit (PFD) bezogener Sicherheitsfaktor (s) festgelegt wird, mit dem die empirische Versagenswahrscheinlichkeit (Pemp) berechnet wird, wobei die empirische Versagenswahrscheinlichkeit (Pemp) um einen Vertrauensanteil (VA) gegenüber der Soll-Versagenswahrscheinlichkeit (PFD) verringert ist.

**7.** Ein überwachtes maschinelles Lernen nach Anspruch 6, **dadurch gekennzeichnet, dass** der Sicherheitsfaktor (s) mit mindestens 1/3 und höchstens 2/3, bevorzugt mit 1/2 festgelegt wird.

**8.** Ein überwachtes maschinelles Lernen nach Anspruch 6 oder 7, **dadurch gekennzeichnet, dass** der Vertrauensanteil (VA) bei einer gegebenen Anzahl (n) von Validierungsdatensätzen (VD) und abgeschätzt wird als Produkt eines kritischen Faktors (z) und eines Faktors, bestehend aus der Quadratwurzel aus dem Quotienten aus der empirischen Versagenswahrscheinlichkeit (Pemp) im Zähler und der Anzahl (n) der Validierungsdatensätze (VD) im Nenner.

**9.** Ein überwachtes maschinelles Lernen nach Anspruch 8, **dadurch gekennzeichnet, dass** eine geschätzt Versagenswahrscheinlichkeit (Pe) bei einer gegebenen Anzahl (n) von Validierungsdatensätzen (VD) berechnet wird als Summe aus dem Vertrauensanteil (VA) und der empirischen Versagenswahrscheinlichkeit (Pemp).

**10.** Ein überwachtes maschinelles Lernen nach Anspruch 9, **dadurch gekennzeichnet**, die Anzahl (n) der Validierungsdatensätze (VD) erhöht wird, wenn die berechnete geschätzte Versagenswahrscheinlichkeit (Pe) über der Soll-Versagenswahrscheinlichkeit (PFD) liegt.

**11.** Ein überwachtes maschinelles Lernen nach einem der vorhergehenden Ansprüche, **dadurch gekennzeichnet, dass** die Trainingsdatensätze (TD) zur mehrfachen Verwendung für Verfahrensdurchläufe in der Trainingsphase (TP) freigegeben werden.

**12.** Ein technisches System zum Durchführen eines technischen Prozesses (TPR) mit einer Systemkomponente, die einen Computer aufweist,
**dadurch gekennzeichnet, dass**
die Systemkomponente des technischen Systems (TS) eingerichtet ist, das computerimplementierte Verfahren nach einem der vorgenannten Ansprüche auszuführen.

**13.** Ein technisches System nach Anspruch 12, **dadurch gekennzeichnet, dass** das technische System (TS) eine bahntechnische Anlage ist, insbesondere ein Bahnübergang (BU), wobei bei diesem Bahnübergang (BU) das computerimplementierte Verfahren eingerichtet ist, eine Hinderniserkennung in einem Gefahrenbereich (GB) des Bahnübergangs (BU) durchzuführen.

**14.** Ein Computerprogramm umfassend Programmbefehle die bei der Ausführung des Programms durch einen Computer diesen dazu veranlassen, zumindest die Schritte c) bis f) des maschinellen Lernens nach einem der Ansprüche 1 - 11 durchzuführen.

**15.** Ein Computerlesbares Speichermedium, auf dem das Computerprogramm nach dem letzten voranstehenden Anspruch gespeichert ist.

## FIG 1

## FIG 2

FIG 3

# FIG 4

$$VA = z \sqrt{\frac{Pemp}{nc}}$$

$$VA = z \sqrt{\frac{Pemp}{n}}$$

Pemp

Pval

0                                                                   P

Pemp = s·PFD
s = 1/3

Ptrue   Pe   PFD        Pec

$\alpha = 0,1\%$
$1-\alpha = 99,9\%$

Pval = PFD(1-$\alpha$+$\alpha$c)

TP

VP

Europäisches
Patentamt

European
Patent Office

Office européen
des brevets

# EUROPÄISCHER RECHERCHENBERICHT

**Nummer der Anmeldung**

EP 23 15 9905

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SIKORA PAVEL ET AL: "Artificial Intelligence-Based Surveillance System for Railway Crossing Traffic", IEEE SENSORS JOURNAL, IEEE, USA, Bd. 21, Nr. 14, 16. Oktober 2020 (2020-10-16), Seiten 15515-15526, XP011866750, ISSN: 1530-437X, DOI: 10.1109/JSEN.2020.3031861 [gefunden am 2021-07-14] * Zusammenfassung; Abbildungen 1,2,4,6,7 * * Abschnitt III, IV.A, V.A * ----- | 1-15 | INV. G06N3/09 B61L29/00 E01B7/00 |
| X | US 2022/398924 A1 (LUCAS JAMES [US] ET AL) 15. Dezember 2022 (2022-12-15) * Zusammenfassung; Abbildungen 2,5 * * Absätze [0002] – [0007], [0016], [0021] – [0024], [0048] – [0055] * ----- | 1-15 | |

**RECHERCHIERTE SACHGEBIETE (IPC)**

G06N
E01B
B61L

Der vorliegende Recherchenbericht wurde für alle Patentansprüche erstellt

| Recherchenort | Abschlußdatum der Recherche | Prüfer |
|---|---|---|
| Den Haag | 21. August 2023 | Houtgast, Ernst |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
   ...........................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

`EP 23 15 9905`

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

`21-08-2023`

| Im Recherchenbericht angeführtes Patentdokument | Datum der Veröffentlichung | Mitglied(er) der Patentfamilie | Datum der Veröffentlichung |
|---|---|---|---|
| US 2022398924 A1 | 15-12-2022 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021200803 A1